# EUROPEAN PATENT APPLICATION

(11) **EP 3 196 047 A1**
(43) Date of publication of application: **26.07.2017**
(21) Application number: 15829141.9
(22) Date of filing: 05.08.2015
(51) Int. Cl.: B60B 35/18, F16C 19/18, F16C 19/52, F16F 15/02, B60B 27/00

(54) **WHEEL BEARING DEVICE**

(30) Priority: 06.08.2014 JP 2014160189
(71) Applicant: NTN Corporation, Osaka-shi, Osaka 550-0003 (JP)
(72) Inventor: SHIGEOKA, Kazuhisa, Iwata-shi Shizuoka 438-8510 (JP); SUMA, Hiroto, Iwata-shi Shizuoka 438-8510 (JP); NISHIKAWA, Kentarou, Iwata-shi Shizuoka 438-8510 (JP); SEKI, Makoto, Bizen-shi Okayama 705-8510 (JP)
(74) Representative: Cohausz & Florack
(86) International application number: PCT/JP2015/072251
(87) International publication number: WO 2016/021649

(57) **Abstract**

One object of the present invention is to provide a wheel bearing apparatus which can prevent generation of resonance between the bearing portion and its peripheral components with keeping the rigidity of the bearing and has superiorities both in the vibration absorbing performance and the durability. According to the present invention, there is provided a wheel bearing apparatus comprising an outer member integrally formed on its inner circumference with double row outer raceway surfaces and having an outer circumference adapted to be mounted on a knuckle of a vehicle; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumferences with double row inner raceway surfaces opposing to the double row outer raceway surfaces; and double row rolling elements contained between the outer raceway surfaces and inner raceway surfaces respectively of the outer member and the inner member characterized in that a vibration damping mechanism for preventing resonance with peripheral components is mounted on a portion of the outer member or the inner member except their portions engaging with their mating components.

## Description

### Field of the invention

The present invention generally relates to a wheel bearing apparatus which can rotationally support a wheel of a vehicle such as an automobile and more particularly to a wheel bearing apparatus provided with a vibration damping mechanism in a vibration transmitting route.

### Description of Background Art

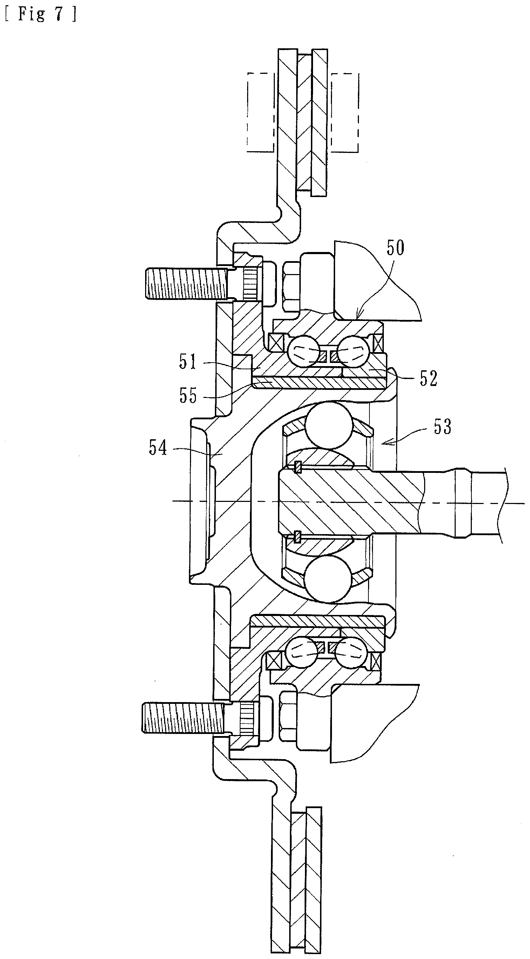

It has been proposed a structure in which an anti-vibration mechanism on a wheel bearing apparatus for mounting a tire wheel or a brake disc, e.g. a structure in which a cylindrical vibration damping material on a portion between a hub wheel for mounting a wheel and a hub wheel. For example as shown in Fig. 7, it has been proposed a vibration damping mechanism in which a vibration suppressing member 55 formed of elastic material is interposed between inner rings 51, 52 and outer joint member 54 of a constant speed universal joint 53 of a double row rolling bearing 50 to suppress transmission of vibration to the double row rolling bearing 50 by damping the vibration of the constant speed universal joint 53 through the vibration suppressing member 55 and thus to improve the bearing life by suppressing fretting wear of the bearing caused by the vibration (e.g. see Patent Document 1 below). The vibration suppressing member 55 comprises polymer material such as thermoplastic resin or elastomer or vibration suppressing steel sheet sandwiching the polymer material.

However, although the vibration suppressing material such as polymer material applied to a hub wheel of an automobile has superior vibration absorbing effect in a high frequency region higher than several kHz, sufficient damping effect cannot be obtained by polymer material such as rubber against resonance noise of 200∼300 Hz caused by vibration of rubber tires due to irregularities of the road. In addition, when application of eccentric load is repeated or continued against a hub wheel for a long time, there would be caused problems in durability of a hub wheel and promotion of compressive permanent distortion caused by eccentric load.

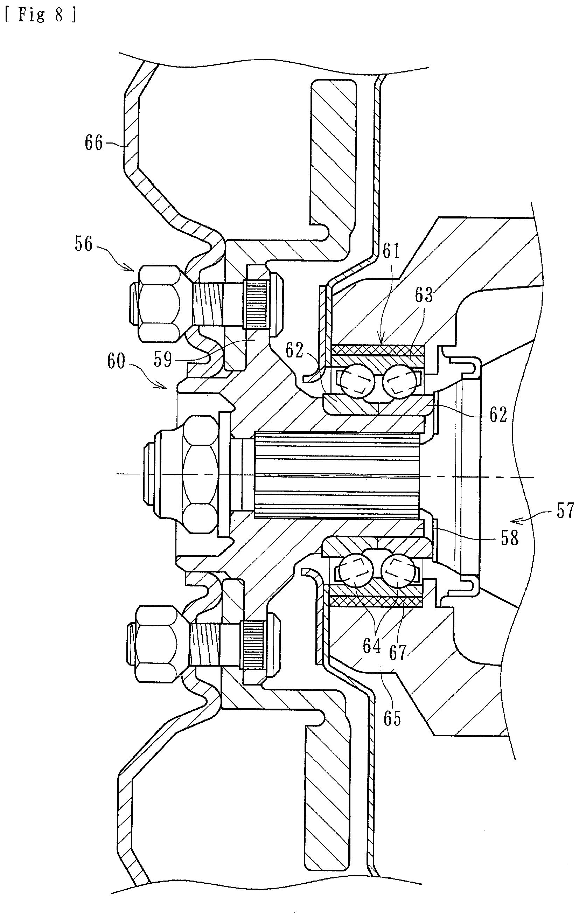

It is known a wheel bearing apparatus 56 shown in Fig. 8 which can solve these problems. The wheel bearing apparatus 56 comprises a hub 60 including a cylindrical hub body 58 to be mounted on a tip end of an axle 57 and a wheel mounting portion (wheel mounting flange) 59 radially extending from the hub body 58, and a bearing portion 61 to be mounted on an outer circumference of the hub body 58.

The bearing portion 61 comprises inner rings 62 mounted on the hub 60 rotationally together with the axle 57 and the hub 60, an outer ring 63 arranged radially outward of the inner rings 62, and a plurality of balls 64 arranged between the inner rings 62 and the outer ring 63. The outer ring 63 is not-rotationally assembled to a knuckle 65 of a suspension of the automobile.

A vibration absorbing portion 67 formed of vibration suppressing alloy material for damping vibration based on the internal friction damping mechanism particular to alloy material is mounted on a vibration transmitting route from the axle 57 to the knuckle 65. The vibration absorbing portion 67 is formed of material different from polymer material such as rubber or elastomer and has remarkable vibration absorbing effect also relative to noise or vibration lower than 1 kHz and thus is able to effectively damp the resonance noise mainly causing cabin noise and vibration. Accordingly, it is possible to effectively prevent the noise or discomfort derived from the vibration from leaking to the cabin of an automobile. In addition, the vibration absorbing portion 67 formed of vibration suppressing alloy material has strength higher than the vibration absorbing portion formed of polymer material and is also superior in the durability. Furthermore, the vibration absorbing portion 67 is less likely to accumulate the compressive permanent distortion particular in the polymer material even though eccentric loads are repeatedly applied (e.g. see Patent Document 2).

### Document of Prior Art

### Patent Documents

Patent Document 1: JP 2001-246903 A
Patent Document 2: JP 2006-306382 A

### Disclosure of the invention

### Problems to be solved by the invention

However, although the wheel bearing apparatus 56 of the prior art can damp the vibration, it cannot prevent the resonance between the constant velocity universal joint 53 and the bearing portion 61 and accordingly it is afraid that unpleasant noise would be caused in the cabin of an automobile. Also in the prior art, although the bearing pre-load is applied to the double row rolling bearing 50 or the wheel bearing apparatus 56, since the elastic member 55 or the vibration absorbing portion 67 is arranged between the bearing 50 and the constant velocity universal joint 53 or between the bearing and knuckle 65, the rigidity of suspension is lowered.

It is, therefore, an object of the present invention to provide a wheel bearing apparatus which can solve problems of the prior art described above and therefore prevent generation of resonance between the bearing portion and its peripheral components with keeping the rigidity of the bearing and have superiorities both in the vibration absorbing performance and the durability.

### Means for solving problems

For achieving the objects mentioned above, there is provided, according to the present invention of claim 1, a wheel bearing apparatus comprising an outer member integrally formed on its inner circumference with double row outer raceway surfaces and having an outer circumference adapted to be mounted on a knuckle of a vehicle; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumferences with double row inner raceway surfaces opposing to the double row outer raceway surfaces; and double row rolling elements contained between the outer raceway surfaces and inner raceway surfaces respectively of the outer member and the inner member characterized in that a vibration damping mechanism for preventing resonance between the bearing and its peripheral components is mounted on a portion of the outer member or the inner member except portions engaging with their mating components.

According to the present invention of claim 1, since it comprises an outer member integrally formed on its inner circumference with double row outer raceway surfaces and having an outer circumference adapted to be mounted on a knuckle of a vehicle; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumferences with double row inner raceway surfaces opposing to the double row outer raceway surfaces; and double row rolling elements contained between the outer raceway surfaces and inner raceway surfaces respectively of the outer member and the inner member and is characterized in that a vibration damping mechanism for preventing resonance between a bearing and its peripheral components is mounted on a portion of the outer member or the inner member except portions engaging with their mating components, it is possible to remarkably reduce abnormal noise in the cabin of an automobile although noise of the driving source e.g. of an electric car is so reduced by preventing generation of the resonance between the bearing portion and its peripheral components with changing the natural frequency of the bearing portion considering the resonance point between the bearing portion and its peripheral components.

According to the present invention of claim 2, the vibration damping mechanism comprises a metallic weight and an elastic member covering the outer surfaces of the metallic weight, mounting portions are formed on both ends of the elastic member, annular grooves are formed on the outer circumferences of the mounting portions, and the vibration damping mechanism is adapted to be secured on the inner member or the outer member by metallic fastening bands to be mounted in the annular grooves.

According to the present invention of claim 3, the vibration damping member has a core metal insert molded into engaging surfaces of an elastic member and is adapted to be press-fitted on the inner member or outer member via the core metal.

According to the present invention of claim 4, the vibration damping mechanism is secured on the axially center portion between the double row inner raceway surfaces. This makes it possible especially in a wheel bearing apparatus having a large axial pitch distance of the double row rolling elements to reduce amount of grease confined in the bearing and to improve the lubrication efficiency with suppressing stay of grease in the middle of the bearing.

According to the present invention of claim 5, since the inner ring is formed with a cylindrical securing portion extending from the inner raceway surface toward the inner-side via a seal-fitting portion and the vibration damping mechanism is secured on the outer circumference of the securing portion, it is possible to simplify the assembling work of the vibration damping mechanism and enables to more easily adjust and exchange the vibration damping mechanism.

According to the present invention of claim 6, since the outer member is formed on its outer-side end with a cylindrical securing portion and the vibration damping mechanism is secured on the securing portion, it is unnecessary to strongly increase the fastening force taking bulge of the vibration damping mechanism by the centrifugal force into consideration and able to easily adjust and exchange the vibration damping mechanism.

According to the present invention of claim 7, since the vibration damping mechanism is secured on the inner circumference between the outer raceway surfaces of the outer member, it is unnecessary to strongly increase the securing force taking bulge of the vibration damping mechanism by the centrifugal force into consideration and able to simplify the assembling work of the vibration damping mechanism and able to reduce amount of grease confined in the bearing and improve the lubrication efficiency with preventing stay of grease in the middle of the bearing.

### Effects of the invention

According to the wheel bearing apparatus of the present invention, since it comprises an outer member integrally formed on its inner circumference with double row outer raceway surfaces and having an outer circumference adapted to be mounted on a knuckle of a vehicle; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumferences with double row inner raceway surfaces opposing to the double row outer raceway surfaces; and double row rolling elements contained between the outer raceway surfaces and inner raceway surfaces respectively of the outer member and the inner member and is characterized in that a vibration damping mechanism for preventing resonance between the bearing and its peripheral components is mounted on a portion of the outer member or the inner member except portions engaging with their mating components, it is possible to remarkably reduce abnormal noise in the cabin of an automobile although noise of the driving source e.g. of an electric car is so reduced by preventing generation of the resonance between the bearing portion and its peripheral components with changing the natural frequency of the bearing portion considering the resonance point between the bearing portion and its peripheral components.

### Brief Description of the Drawings

[Fig. 1] A longitudinal-sectional view of one embodiment of a wheel bearing apparatus of the present invention;
[Fig. 2] An enlarged view showing a vibration damping mechanism of Fig. 1;
[Fig. 3] An enlarged view showing a modification of the vibration damping mechanism of Fig. 2;
[Fig. 4] A longitudinal-sectional view showing a modification of the wheel bearing apparatus of Fig. 1;
[Fig. 5] A longitudinal-sectional view showing another modification of the wheel bearing apparatus of Fig. 1;
[Fig. 6] A longitudinal-sectional view showing further modification of the wheel bearing apparatus of Fig. 1;
[Fig. 7] A longitudinal-sectional view showing a wheel bearing apparatus of the prior art; and
[Fig. 8] A longitudinal-sectional view showing another wheel bearing apparatus of the prior art.

### Preferable mode for carrying out the invention

A preferable mode for carrying out the present invention is a wheel bearing apparatus comprising an outer member integrally having on its outer circumference an integrally formed body mounting flange to be mounted on a knuckle and on its inner circumference double row outer raceway surfaces; an inner member including a hub wheel and an inner ring, the hub wheel being integrally formed on its one end with a wheel mounting flange and having a cylindrical portion axially extending from the wheel mounting flange, the inner ring being press-fitted onto the cylindrical portion of the hub wheel, the hub wheel and the inner ring being formed on their outer circumference respectively with double row inner raceway surfaces opposing to the double row outer raceway surfaces; double row rolling elements contained between the inner and outer raceway surfaces respectively the inner and outer members; and seals mounted in annular openings formed between both ends of the outer and inner members characterized in that a vibration damping mechanism is secured on the axially center portion between the double row inner raceway surfaces; that the vibration damping mechanism comprises a metallic weight and an elastic member having a predetermined thickness and covering the outer surfaces of the metallic weigh, that mounting portions are formed on both ends of the elastic member, annular grooves are formed on the outer circumferences of the mounting portions, and that the vibration damping mechanism is adapted to be secured on the inner member or the outer member by metallic fastening bands mounted in the annular grooves.

### Embodiment

A preferred embodiment of the present invention will be described with reference to the accompanied drawings.

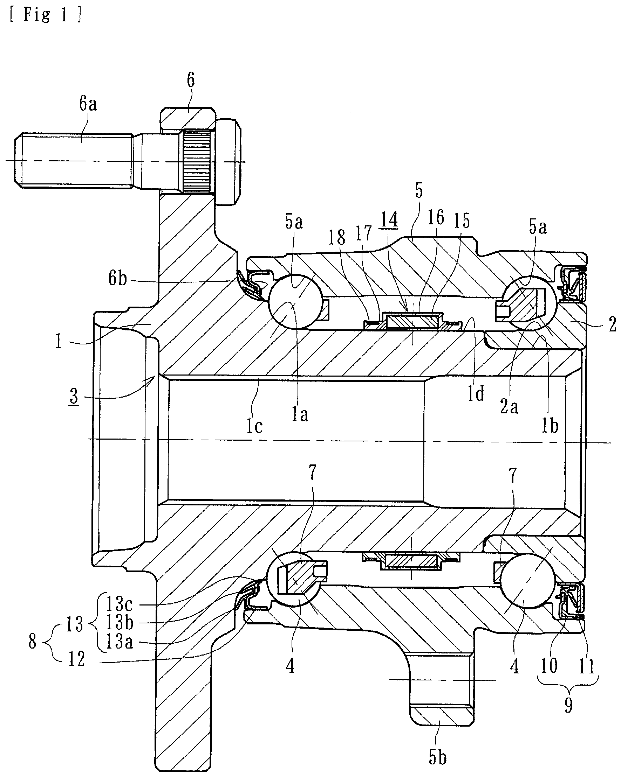

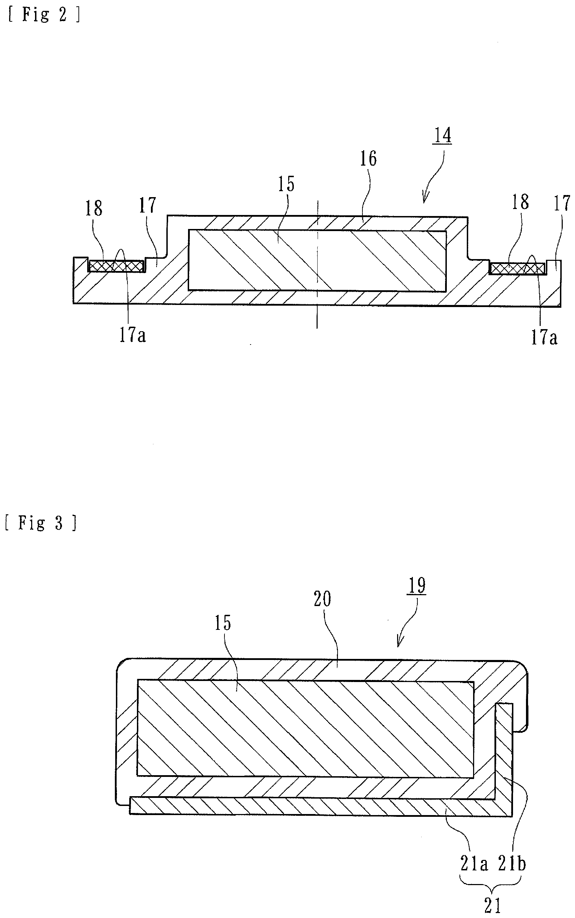

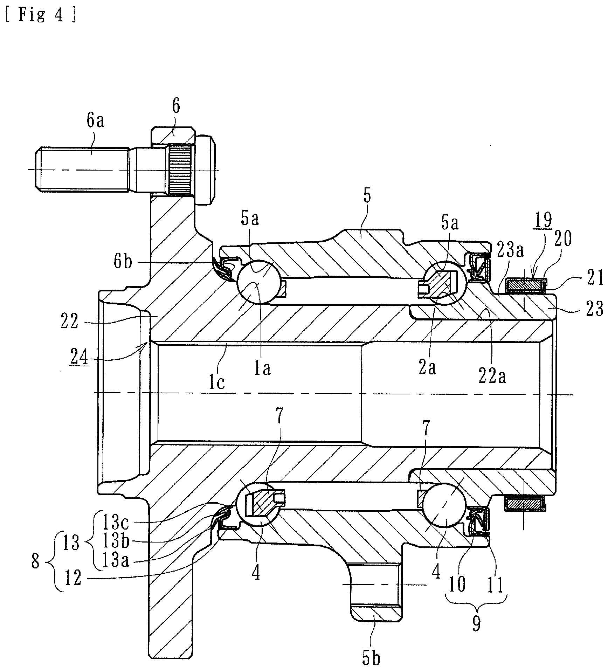

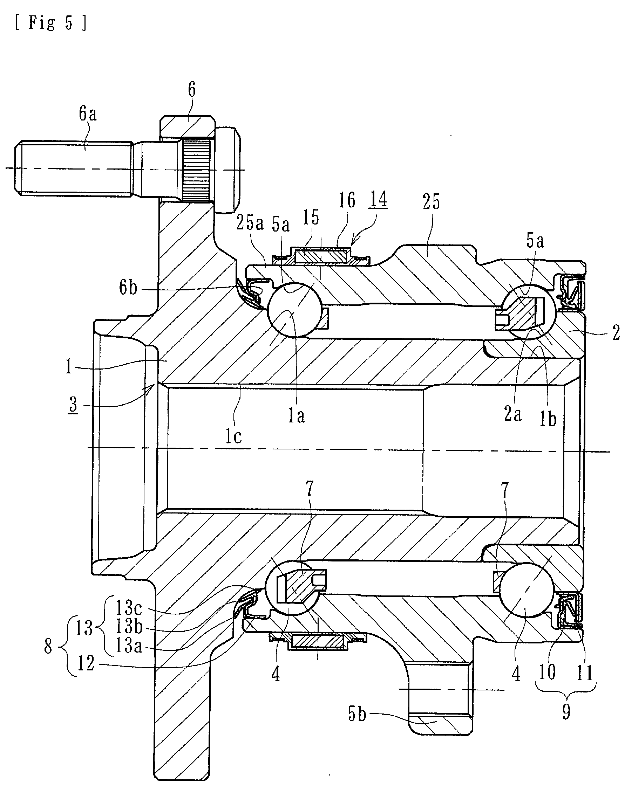

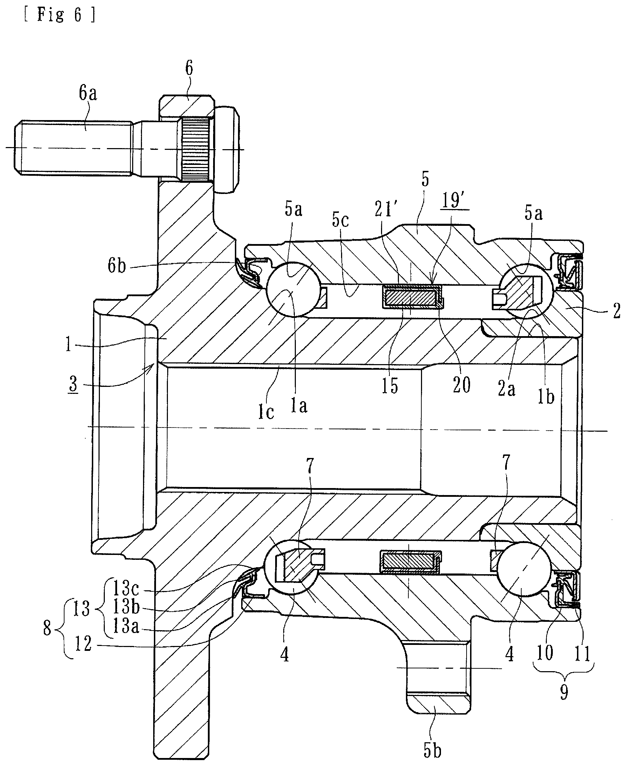

Fig. 1 is a longitudinal-sectional view of one embodiment of a wheel bearing apparatus of the present invention, Fig. 2 is an enlarged view showing a vibration damping mechanism of Fig. 1, Fig. 3 is an enlarged view showing a modification of the vibration damping mechanism of Fig. 2, Fig. 4 is a longitudinal-sectional view showing a modification of the wheel bearing apparatus of Fig. 1, Fig. 5 is a longitudinal-sectional view showing another modification of the wheel bearing apparatus of Fig. 1, and Fig. 6 is a longitudinal-sectional view showing further modification of the wheel bearing apparatus of Fig. 1. In description of this specification, an outer-side of a bearing apparatus when it is mounted on a vehicle is referred to as "outer-side" (a left-side in a drawing), and an inner-side of a bearing apparatus when it is mounted on a vehicle is referred to as "inner-side" (a right-side in a drawing).

The wheel bearing apparatus shown in Fig. 1 is a so-called "third generation" type for a driving wheel and comprises an inner member 3 including a hub wheel 1 and an inner ring 2 press-fitted on the hub wheel 1, and an outer member 5 mounted on the inner member 3 via a double row rolling elements (balls) 4, 4.

The hub wheel 1 is integrally formed, on its outer-side end, with a wheel mount flange 6 for mounting a wheel (not shown) and is formed, on its outer circumference, with one (outer-side) inner raceway surface 1a and a cylindrical portion 1b axially extending from the inner raceway surface 1a. A serration (or spline) 1c for torque transmission is formed on the inner circumference of the hub wheel 1 and hub bolts 6a are secured on the wheel mounting flange 6 at its circumferentially equidistant positions. On the other hand, the inner ring 2 is formed on its outer circumference with a inner raceway surface 2a and is press-fitted via a predetermined interference onto the outer circumference of the cylindrical portion 1b of the hub wheel 1.

The hub wheel 1 is made of medium-high carbon steel such as S53C including carbon of 0.40∼0.80% by weight and is hardened by high frequency induction hardening as having a surface hardness of 58∼64 HRC over the inner raceway surface 1a and a region from an inner-side base 6b of the wheel mounting flange 6 to the cylindrical portion 1b. On the other hand, the inner ring 2 is formed of high carbon chrome steel such as SUJ2 and dipping hardened to their cores as having hardness of 58∼64 HRC and the rolling elements (balls) 4 are formed of high carbon chrome steel such as SUJ2 and dipping hardened as having hardness of 62∼67 HRC.

The outer member 5 is formed, on its outer circumference, with body mount flange 5b adapted to be mounted on a knuckle (not shown) forming part of the suspension and also formed, on its inner circumference, with double row outer raceway surfaces 5a, 5a opposing to the inner raceway surfaces 1a, 2a of the inner member 3. The double row rolling elements 4,4 are rollably contained between the inner and outer raceway surfaces 5a, 1a and 5a, 2a via cages 7.

The outer member 5 is formed of medium-high carbon steel such as S53C including carbon of 0.40∼0.80% by weight and at least the outer raceway surfaces 5a, 5a are hardened by high frequency induction hardening as having a surface hardness of 58∼64 HRC. Seals 8, 9 are mounted on both end openings formed between the outer member 5 and inner member 3 to prevent leakage of lubricating grease confined within the bearing and entering of rain water or dusts from the outside into the bearing.

The inner-side seal 9 of seals 8, 9 is formed of so-called a pack seal comprising an annular sealing plate 10 and a slinger 11 oppositely arranged each other. The sealing plate 10 is press-fitted into the inner-side end of the outer member 5 forming a stator member via a predetermined interference and the slinger 11 is press-fitted onto the inner ring 2 forming a rotational member via a predetermined interference.

The outer-side seal 8 is formed as an integrated seal comprising a core metal 12 press-fitted into the outer-side end of the outer member 5 and a sealing member 13 adhered to the core metal 12. The core metal 12 is press-formed of austenitic stainless steel sheet (JIS SUS 304 etc.) or preserved cold rolled steel sheet (JIS SPCC etc.) so as to have a generally annular configuration.

On the other hand, the sealing member 13 is formed of synthetic rubber such as NBR (acrylonitrile-butadiene rubber) and integrally adhered to the core metal 12 by vulcanizing adhesion. The sealing member 13 comprises an integrally formed side lip 13a inclined radially outward, a dust lip 13b inclined radially outward at radially inward of the side lip 13a and a grease lip 13c inclined toward the inner-side.

The inner-side base portion 6b of the wheel mounting flange 6 is formed as having a circular arc cross-section and the side lip 13a and the dust lip 13b are slidably contacted to the base portion 6b via a predetermined axial interference and the grease lip 13c is also slidably contacted to the base portion 6b via a predetermined radial interference. There are examples of material of sealing member 13 other than NBR such as HNBR (hydrogenation acrylonitric-butadiene rubber), EPDM (ethylene propylene rubber), ACM (poly-acrylic rubber) superior in heat and chemical resistance, FKM (fluororubber) or silicone rubber.

Although it is shown herein a wheel bearing apparatus formed by a double row angular contact ball bearing using balls as rolling elements 4, the present invention is not limited to such a bearing and may be a double row tapered roller bearing using tapered rollers as rolling elements 4. In addition, although it is shown herein the bearing of third generation type in which the inner raceway surface 2a is directly formed on the outer circumference of the hub wheel 1, the present invention can be applied to the first and second generation type bearings (not shown) in which a pair of inner rings are press-fitted onto the cylindrical portion 1b.

As shown in Fig. 1, a vibration damping mechanism 14 (i.e. resonance preventing means) is secured on the axially center portion between the double row inner raceway surfaces 1a, 2a, more particularly on the outer circumference 1d from the inner raceway surface 1a of the hub wheel 1 to the cylindrical portion 1b. As shown in the enlarged view of Fig. 2, the vibration damping mechanism 14 comprises an annular metallic weight 15 formed of iron based metal and an elastic member 16 formed of synthetic rubber such as NBR and having a predetermined thickness for covering the outer surfaces of the metallic weight 15. Mounting portions 17,17 are formed on both ends of the elastic member 16 and annular grooves 17a, 17a are formed on the outer circumferences of the mounting portions 17,17. The vibration damping mechanism 14 is adapted to be secured on the outer circumference 1d of the hub wheel 1 by metallic fastening bands 18,18 mounted in the annular grooves 17a, 17a.

It is possible to damp vibrations on a vibration transmitting route transmitted via the bearing portion by the elastic member 16 of the vibration damping mechanism 14. In addition, it is possible to prevent generation of resonance between the bearing portion and its peripheral components by changing the natural frequency of the bearing portion taking the resonance point between the bearing portion and its peripheral components into consideration. Thus, it is possible to provide a wheel bearing apparatus which has superiorities both in the vibration absorbing performance and the durability.

In the wheel bearing apparatus of this kind having a large axial pitch distance of the double row rolling elements 4, 4, it is afraid that not only increasing manufacturing cost due to increase of lubrication grease to be filled within the bearing and increasing of temperature of the bearing due to agitating resistance of grease but also lowering lubrication efficiency due to stay of grease actually contributing to the bearing lubrication in an axially middle portion of the double row inner raceway surfaces 1a, 2a. However, according to the present invention, it is possible to reduce the grease filling amount and thus to suppress the stay of grease in the middle portion of bearing and to improve the lubrication efficiency by mounting the vibration damping mechanism 14 in the axially middle portion between the double row inner raceway surfaces 1a, 2a.

Although it is described to use iron based annular metal as the weight 15, it may be possible to use other metals having high specific weight e.g. nonferrous metal such as zinc, copper, lead, nickel etc.. Plurality of weights may be circumferentially arranged in place of the annular configuration. The elastic member 16 may be formed of thermoplastic resin such as PA (polyamide) 66 other than synthetic rubber.

Fig. 3 shows a modification of the vibration damping mechanism 14 shown in Fig. 2. Same reference numerals are used for designating the same structural elements of the previously described embodiment and detailed description of them will be omitted.

The vibration damping mechanism 19 of Fig. 3 comprises an annular weight 15 of iron based metal and an elastic member 20 of synthetic rubber such as NBR etc. having a predetermined thickness for covering the outer surface of the weight 15. A core metal 21 is insert molded integrally with the elastic member 20 at their engaging surfaces. The core metal 21 is adapted to be press-fitted onto the outer circumference 1d of the hub wheel 1.

The core metal 21 is formed of ferritic stainless steel sheet, austenitic stainless steel sheet or preserved cold rolled steel sheet by press working so as to have an L-shaped cross-section and comprises a cylindrical fitting portion 21a adapted to be press-fitted onto the outer circumference 1d of the hub wheel 1 and a standing portion 21b extending radially inward from the end of the fitting portion 21a. Such a configuration of the core metal 21 enables to have sufficient strength and rigidity even though use of thin material and thus to improve the workability during press-fitting and the securing power after press-fitting.

In addition to the advantages of the vibration damping mechanism 14 of Fig. 2, the vibration damping mechanism 19 of this modification of Fig. 3 can be easily mounted onto the outer circumference 1d of the hub wheel 1 only by press-fitting and thus can simplify the assembling workability. Furthermore, this vibration damping mechanism 19 is possible to damp vibrations on the vibration transmitting route via the bearing by the elastic member 20 of the vibration damping mechanism 19 and also possible to prevent generation of resonance between the bearing portion and its peripheral components by the weight 15 of the vibration damping mechanism 19 by changing the natural frequency of the bearing portion previously taking the resonance point between the bearing portion and its peripheral components into consideration.

A wheel bearing apparatus shown in Fig. 4 is a modification of the previous embodiment (Fig. 1). This modification is different from the embodiment of Fig. 1 only in structures of the inner member and the vibration damping mechanism and accordingly same reference numerals are used herein as those used for designating the same structural elements of the previously described embodiment and thus detailed description of them will be omitted.

The wheel bearing apparatus shown in Fig. 4 is a so-called "third generation" type for a driving wheel and comprises an inner member 24 including a hub wheel 22 and an inner ring 23 press-fitted on the hub wheel 22, and an outer member 5 mounted on the inner member 24 via the double row rolling elements 4,4.

The hub wheel 22 is integrally formed, on its outer-side end, with a wheel mount flange 6 for mounting a wheel (not shown) and is formed, on its outer circumference, with one (outer-side) inner raceway surface 1a and a cylindrical portion 22a axially extending from the inner raceway surface 1a. A serration (or spline) 1c for torque transmission is formed on the inner circumference of the hub wheel 22. On the other hand, the inner ring 23 is formed, on its outer circumference, with the other (inner-side) inner raceway surface 2a and a cylindrical securing portion 23a extending from the inner raceway surface 2a toward the inner-side via a seal-fitting portion of the seal 9. The inner ring 23 is press-fitted via a predetermined interference onto the outer circumference of the cylindrical portion 22a of the hub wheel 22.

The hub wheel 22 is made of medium-high carbon steel such as S53C including carbon of 0.40∼0.80% by weight and is hardened by high frequency induction hardening as having a surface hardness of 58∼64 HRC over the inner raceway surface 1a and a region from the inner-side base 6b of the wheel mounting flange 6 to the cylindrical portion 22a. On the other hand, the inner ring 23 is formed of high carbon chrome steel such as SUJ2 and dipping hardened to their cores as having hardness of 58∼64 HRC.

The vibration damping mechanism 19 is secured on the inner-side end of the inner member 24, more particularly on the outer circumference of the securing portion 23a. It is possible to simplify the assembling work of the vibration damping mechanism 19 and enables to more easily adjust and exchange the vibration damping mechanism 19.

A wheel bearing apparatus shown in Fig. 5 is another modification of the previous embodiment (Fig. 1). This modification is different from the embodiment of Fig. 1 only in a configuration of the outer member and accordingly same reference numerals are also used herein as those used for designating the same structural elements of the previously described embodiments and thus detailed description of them will be omitted.

The wheel bearing apparatus shown in Fig. 5 is a so-called "third generation" type for a driving wheel and comprises an inner member 3 including a hub wheel 1 and an inner ring 2 press-fitted on the hub wheel 1, and an outer member 25 mounted on the inner member 3 via the double row rolling elements 4,4.

The outer member 25 is formed, on its outer circumference, with body mount flange 5b adapted to be mounted on a knuckle (not shown) forming part of the suspension and also formed, on its inner circumference, with double row outer raceway surfaces 5a, 5a opposing to the inner raceway surfaces 1a, 2a of the inner member 3. A cylindrical securing portion 25a is formed by turning on the outer-side end i.e. opposite end to the knuckle mount end of the outer member 25.

The vibration damping mechanism 14 is secured on the securing portion 25a by press-fitting. Since the vibration damping mechanism 14 is secured on the securing portion 25a which is stator-side of the bearing, it is unnecessary to strongly increase the securing force taking bulge of the vibration damping mechanism 14 into consideration and able to easily and simply assemble, adjust and exchange the vibration damping mechanism 14.

A wheel bearing apparatus shown in Fig. 6 is a further modification of the previous embodiment (Fig. 1). This modification is different from the embodiment of Fig. 1 only in a securing position of the vibration damping mechanism and accordingly same reference numerals are also used herein as those used for designating the same structural elements of the previously described embodiments and thus detailed description of them will be omitted.

The wheel bearing apparatus shown in Fig. 6 is a so-called "third generation" type for a driving wheel and comprises an inner member 3 including a hub wheel 1 and an inner ring 2 press-fitted on the hub wheel 1, and an outer member 5 mounted on the inner member 3 via the double row rolling elements 4, 4.

A vibration damping mechanism 19' is secured by press-fitting on the inner circumference 5c, more particularly on an axially middle position between the outer raceway surfaces 5a, 5a of the outer member 5. This vibration damping mechanism 19' is different from the vibration damping mechanism 19 of Fig. 3 only in an arrangement of a core metal 21' and accordingly same reference numerals are also used herein as those used for designating the same structural elements of the vibration damping mechanism 19 of Fig. 3 and thus detailed description of them will be omitted.

This vibration damping mechanism 19' comprises the annular weight 15 and the elastic member 20 of synthetic rubber such as NBR etc. having a predetermined thickness for covering the outer surface of the weight 15. A core metal 21' is insert molded integrally with the elastic member 20. The core metal 21' is adapted to be press-fitted onto the inner circumference 5c of the outer member 5.

Since the vibration damping mechanism 19' is secured on the inner circumference 5c between the outer raceway surfaces 5a, 5a of the outer member 5 forming stator-side of the bearing, it is unnecessary to strongly increase the securing force taking bulge of the vibration damping mechanism 19' into consideration and able to simplify the assembling work of the vibration damping mechanism 19' and able to reduce amount of grease confined in the bearing and improve the lubrication efficiency with suppressing stay of grease in the middle of the bearing.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The present invention can be applied to a wheel bearing apparatus comprising an outer member having an integrally formed body mounting flange and a hub wheel having at its one end an integrally formed wheel mounting flange and having a relatively large axial pitch distance of double row rolling elements.

### Description of Reference numerals

1, 22 hub wheel
1a, 2a inner raceway surface
1b, 22a cylindrical portion
1c serration
1d outer circumference of hub wheel
2, 23 inner ring
3, 24 inner member
4 rolling element
5, 25 outer member
5a outer raceway surface
5b body mounting flange
5c inner circumference of outer member
6 wheel mounting flange
6a hub bolt
6b inner-side base of wheel mounting flange
7 cage
8 outer-side seal
9 inner-side seal
10 sealing plate
11 slinger
12, 21, 21' core metal
13 sealing member
13a side lip
13b dust lip
13c grease lip
14,19,19' vibration damping mechanism
15 weight
16, 20 elastic member
17 mounting portion
17a annular groove
18 fastening band
21a fitting portion
21b standing portion
23a securing portion of inner ring
25a securing portion of outer member
50 double row rolling bearing
51, 52, 62 inner ring
53 constant velocity universal joint
54 outer joint member
55 elastic member
56 wheel bearing apparatus
57 axle
58 hub body
59 wheel mounting portion
60 hub
61 bearing portion
63 outer ring
64 ball
65 outer ring mounting portion
66 wheel
67 vibration absorbing portion

## Claims

1. A wheel bearing apparatus comprising:
an outer member (5, 25) integrally formed on its inner circumference with double row outer raceway surfaces (5a, 5a) and having an outer circumference adapted to be mounted on a knuckle of a vehicle;
an inner member (3 , 24) including a hub wheel (1, 22) and at least one inner ring (2, 23), the hub wheel (1, 22) being integrally formed on its one end with a wheel mounting flange (6) and having a cylindrical portion (1b, 22a) axially extending from the wheel mounting flange (6), the inner ring (2,23) being press fitted onto the cylindrical portion (1b, 22a) of the hub wheel (1, 22), the inner member (3, 24) being formed on its outer circumferences with double row inner raceway surfaces (1a, 7a) opposing to the double row outer raceway surfaces (5a, 5a); and
double row rolling elements (4, 4) contained between the outer raceway surfaces (5a, 5a) and inner raceway surfaces (1a, 7a) respectively of the outer member (5, 25) and the inner member (3, 24) **characterized in**:
**that** a vibration damping mechanism (14, 19 or 19') for preventing resonance between a bearing and its peripheral components is mounted on a portion of the outer member (5, 25) or the inner member (3, 24) except portions engaging with their mating components.

2. A wheel bearing apparatus of claim 1 wherein the vibration damping mechanism (14) comprises a metallic weight (15) and an elastic member (16) covering the outer surfaces of the metallic weight (15), mounting portions (17,17) are formed on both ends of the elastic member (16), annular grooves (17a, 17a) are formed on the outer circumferences of the mounting portions (17,17), and the vibration damping mechanism (14) is adapted to be secured on the inner member (3, 24) or the outer member (5, 25) by metallic fastening bands (18, 18) to be mounted in the annular grooves (17a, 17a).

3. A wheel bearing apparatus of claim 1 wherein the vibration damping member (19) has a core metal (21) insert molded into engaging surfaces of an elastic member (20) and is adapted to be press-fitted on the inner member (3, 24) or outer member (5, 25) via the core metal (21).

4. A wheel bearing apparatus of any one of claims 1∼3 wherein the vibration damping mechanism (14 or 19) is secured on the axially center portion between the double row inner raceway surfaces (1a, 2a).

5. A wheel bearing apparatus of any one of claims 1∼3 wherein the inner ring (23) is formed with a cylindrical securing portion (23a) extending from the inner raceway surface (2a) toward the inner-side via a seal-fitting portion and the vibration damping mechanism (14 or 19) is secured on the outer circumference of the securing portion (23a).

6. A wheel bearing apparatus of any one of claims 1∼3 wherein the outer member (25) is formed on its outer-side end with a cylindrical securing portion (25a) and the vibration damping mechanism (14 or 19) is secured on the securing portion (25a).

7. A wheel bearing apparatus of any one of claims 1 or 3 wherein the vibration damping mechanism (19') is secured on the inner circumference (5c) between the outer raceway surfaces (5a, 5a) of the outer member (5).
